(19) **Europäisches Patentamt / European Patent Office / Office européen des brevets**

(11) **EP 3 714 231 B1**

(12) **EUROPEAN PATENT SPECIFICATION**

(45) Date of publication and mention of the grant of the patent:
**03.07.2024 Bulletin 2024/27**

(21) Application number: **18803451.6**

(22) Date of filing: **21.11.2018**

(51) International Patent Classification (IPC):
**G01B 11/06** (2006.01)      **G01B 11/27** (2006.01)
**B05B 12/00** (2018.01)

(52) Cooperative Patent Classification (CPC):
**G01B 11/0616; B05B 12/084;** B05B 13/0452;
B05B 16/20; G01B 11/27

(86) International application number:
**PCT/EP2018/082100**

(87) International publication number:
**WO 2019/101803 (31.05.2019 Gazette 2019/22)**

(54) **SYSTEM AND METHOD FOR CHARACTERIZING A COATING SUCH AS A PAINT FILM BY RADIATION, AND PAINTING FACILITY WITH SUCH A SYSTEM**

SYSTEM UND VERFAHREN ZUR CHARAKTERISIERUNG EINER BESCHICHTUNG WIE EINEM LACKFILM UND LACKIERUNGSANLAGE MIT SOLCH EINEM SYSTEM

SYSTÈME ET PROCÉDÉ PERMETTANT DE CARACTÉRISER UN REVÊTEMENT TEL QU'UN FILM DE PEINTURE PAR RAYONNEMENT ET INSTALLATION DE PEINTURE DOTÉE D'UN TEL SYSTÈME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.11.2017 EP 17203592**

(43) Date of publication of application:
**30.09.2020 Bulletin 2020/40**

(73) Proprietor: **ABB Schweiz AG**
**5400 Baden (CH)**

(72) Inventors:
• **MAAS, Deran**
**8046 Zürich (CH)**
• **RADISAVLJEVIC, Branimir**
**8037 Zürich (CH)**
• **PORUS, Mariya**
**8953 Dietikon (CH)**
• **VAN MECHELEN, Jacobus Lodevicus Martinus**
**8105 Regensdorf (CH)**

(74) Representative: **Zimmermann & Partner Patentanwälte mbB**
**Postfach 330 920**
**80069 München (DE)**

(56) References cited:
EP-A1- 2 899 499      EP-A2- 1 176 388
US-A- 4 977 853       US-A- 6 115 128
US-A1- 2008 091 360

**Description**

Aspects of the invention relate to a sensor system for characterizing at least one paint layer of a coating of a coated/coated body, in particular of a freshly applied paint film of an automobile or the like. The sensor system has a radiation emitter carried by a measuring device. Other aspects of the invention relate to a painting facility having the sensor system.

Technical background:

Automobile bodies are covered by multiple layers of paint, collectively referred to as a paint film, to protect against oxygen and other harmful substances in the environment, and for aesthetics. The painting process at automobile manufacturers is mainly done in paint process lines, in which the painting of the often metallic frames is performed by robots. The line has many aligned compartments and a central transportation system by which the automobile bodies are moved in-line from one section to the next one. After the painting process of a specific layer is finished, the frame enters a flash-off area where the solvents have the time to evaporate at room temperature, followed by a curing stage inside a furnace at elevated temperatures. Quality control is presently performed after each furnace or after the final furnace in the line.

For this purpose, prior art techniques such as ultrasonic and magnetic sensing have been developed for determining the thickness of paint layers. However, these techniques only work in contact mode, which is generally undesired. Recently, methods based on THz radiation have been proposed. For example, JP 2004028618 A and EP 2213977 A1 describe respective methods for determining the thickness of a paint film using THz radiation.

EP 2899499 A1 describes a sensor system for characterizing a coating, such as a paint film, of a coated body in a non-contact manner by use of THz radiation. The THz system includes a THz emitter and a THz detector for detecting incoming THz radiation having interacted with the coating. A positioning system comprises a movable unit carrying the THz emitter so that by moving the movable unit the THz emitter is positioned relative to the coated body. A distance sensor may be operable for detecting a surface orientation and/or surface curvature of the coated body by scanning the distance sensor over the portion.

US 4977853 A describes a non-contact wet or dry film thickness measuring device which includes a triangulation optical sensor mounted on a mechanical placement device, such as a computer controlled robotic arm, to position the device relative to a substrate or article for measuring the paint film thickness. Three auxiliary sensors are disposed around the optical sensor, and any angular alignment of surface may be corrected by measuring the distance to the surface from each of the three auxiliary sensors computing the angular error, and then correcting the angular position in accordance therewith.

US 2008/091360 A1 describes a system and method for measuring a surface appearance of a surface, the system having a sensor tool including ultrasonic pulse echo layer thickness (PELT) sensors, an appearance sensor and a surface relationship sensor. The sensor tool is positioned and a film thickness is measured with the PELT sensors. Thereafter, the surface relationship sensor senses the distance between the appearance sensor and the surface, the appearance sensor is then positioned about the surface based on the sensed distance, and once re-positioned, the appearance sensor measures the surface appearance of the surface.

On average, around 28% of the automobile bodies do not pass the quality control and have to be reworked, either by paint robots or manually. This step is a major complication for the production line. An automobile frame spends one third of the total production time in the paint line, which explains that painting of the automobile body is among the most expensive steps of the automobile manufacturing process. The cost and complexity of the reworking, in particular, thus adds significantly to the total manufacturing cost. It is therefore a longstanding desire to keep the rate of reworking low and to reduce the product line complexity at this step.

In view of the above and for other reasons, there is a need for the present invention.

Summary of the invention

In view of the above, a sensor system for measuring a parameter of at least one paint layer provided on a surface of an object according to claim 1, a method for measuring a parameter of at least one paint layer provided on a surface of an object according to claim 8, and a coating facility according to claim 15 are provided.

According to a first aspect, a sensor system for measuring a parameter of at least one paint layer provided on a surface of an object is provided. It comprises a robot arm, a measuring device mounted to the robot arm, comprising: a radiation emitter and a radiation receiver, which work in the Terahertz range, for measuring the parameter of the at least one paint layer, a sensor arrangement comprising a deflectometry system including a camera for sensing an orientation and a distance of the measuring device with respect to a surface of the object when the measuring device is positioned in a predefined pose, a control unit configured for controlling the robot arm, and for controlling the operation of the measuring device, wherein the control unit is configured to control a movement of the robot arm with the measuring device about the object, for carrying out a measurement of a parameter of the at least one paint layer at at least one predefined measuring location on the surface of the object, by taking into account positioning data of the robot arm and measurement data from the sensor arrangement and optionally from the radiation receiver, so that prior to carrying out a measurement: a distance between the measuring device and the surface of the object is adjusted to be in a predefined distance range, and a vector of the measuring direction of the measuring device is adjusted to be normal with respect to the surface of the object within an angular tolerance range from -5° to 5°.

According to a second aspect, a method for measuring a parameter of at least one paint layer provided on a surface of an object is provided. It comprises: providing a sensor system of the first aspect, positioning the measuring device at a first measuring pose to measure a parameter of the at least one paint layer at a predefined measuring location on the surface of the object, wherein the distance between the measuring device and the surface of the object is adjusted to be in a predefined distance range, and wherein the vector of the measuring direction of the measuring device is adjusted to be normal with respect to the surface of the object within an angular tolerance range from -5° to 5°, emitting at least one radiation signal towards the surface of the object, receiving a reflection of the radiation signal that has interacted with the paint layer, calculating a parameter of the paint layer using the reflected radiation signal.

According to a third aspect, a coating facility is provided. It comprises a coating unit for applying at least one coating layer of a coating to an object; and a sensor system according to the first aspect, for characterizing the coating including the applied coating layer by a method of the second aspect.

The sensor system according to embodiments of the invention allows for obtaining an accurate and meaningful set of paint parameter(s), in particular a thickness of at least one paint layer of a coating, for a number of measuring locations on an object in a short time span. As the measuring device of the sensor system may be quickly, precisely and economically positioned in predefined measurement positions, the quality of a coating on a coated body may be characterized in a short time span.

Thereby, embodiments of the invention open ways to perform industrial quality control of coatings such as paint films in a short amount of time, and potentially even before the paint has dried. This is enabled by the THz optical system allowing a non-contact measurement, and by the laser source being arranged outside the measuring device and thereby potentially away from any inflammable or explosive solvents evaporating from the paint during the drying process.

The fast quality control, in turn, allows removing products having failed the quality control more quickly from the production line and re-directing them to a process route in which the faults are corrected, thereby optimizing the process route. In addition, corrections before drying of the paint and generally a shortening of the process time and increase of the product yield are potentially enabled.

Further advantages, features, aspects and details that can be combined with embodiments described herein are evident from the dependent claims, the description and the drawings.

Brief description of the Figures:

The details will be described in the following with reference to the figures, wherein

Fig. 1    is a schematic partial view, illustrating the operation of a sensor system according to an embodiment of the invention;

Fig.2    is a schematic side view of a sensor system according to an embodiment of the invention;

Fig. 3    is a schematic view showing a measuring device of embodiments having a number of distance sensors to enable an alignment process;

Fig. 4    is a schematic view showing a measuring device of embodiments having line segment sensors to enable an alignment process;

Fig. 5    is a schematic view showing a measuring device of embodiments according to the invention having a deflectrometry system to enable an alignment process;

Fig. 6    is a schematic view of a painting facility according to an embodiment of the invention.

Detailed description of aspects of the invention

In the following, some more aspects of the invention are described. Unless explicitly stated otherwise, the aspects are independent of each other and can be combined in any manner. For example, any aspect or embodiment described in this document can be combined with any other aspect or embodiment.

Generally, as used herein, the measuring device mounted to a robot arm includes an emitter system for radiation, which is also called radiation emitter, and a receiver system for radiation, which is also called radiation receiver. Both are configured to work in the same wavelength regime, which is preferably Terahertz radiation, as defined elsewhere herein. The sensor system according to embodiments may as well be configured to work with other suitable wavelength regimes, depending on the nature of the coating to be examined and the material and structure of the body which is coated. In the following, THz radiation is used in examples, while it is understood that the concept of embodiments may also be applied with other suitable radiation types. Generally, as used herein, the term "pose" is intended to include a 3D position and also an angular orientation of an object, such as the measuring device described herein. It is understood that a pose needs at least a fixed reference point or coordinate system, such as a cartesian coordinate system with its base at a spatially fixed location. In embodiments, this may for example be (non-limiting) a defined location at the base of the robot arm. With a pose, the position of an object in space is precisely defined.

First, some **general aspects of the sensor system** are described. According to an aspect, the sensor system is adapted for a non-contact measurement, i.e. without any sensor component requiring direct physical contact with the coated body. This does not exclude a holder holding the coated body, or any further sensor component other than the Radiation emitter and receiver having contact with the coated body, in particular with an uncoated portion of the coated body or a portion being coated differently than the sensed coating.

According to aspects, the parameter is a thickness of the at least one paint layer. According to the invention, the sensor arrangement comprises a deflectometry system. According to further aspects the sensor arrangement comprises additionally at least one of the following: at least three distance sensors, at least two line segment sensors, a 3D scanner, a time-of-flight 3D camera.

According to aspects, the sensor system further comprises a projecting device for projecting, preferably in the visible range or the infrared range, an optical pattern onto the surface of the object, wherein the optical pattern is projected while being substantially centered about the measurement direction, the optical pattern preferably comprising at least one of: a line pattern, preferably an orthogonal line pattern, and a graphical pattern including curves. According to aspects, the predefined distance range is from about 5 cm to about 25 cm, and wherein the angular tolerance range is from -5° to 5°, more preferably from -2° to 2°. According to aspects, the sensor system further comprising at least one 3D sensor, and the control unit is configured to determine the position of the object with respect to the robot arm and the measuring device in a 3D coordinate system. According to aspects, the control unit is further configured to store a predefined 3D model of the object. First, some **general aspects of the method** are described. According to aspects, the method includes that positioning the measuring device at a first measuring pose comprises moving the measuring device to a predefined pose, to determine the distance of the measuring device to the surface and the angular orientation with respect to the surface by using signals from the sensor arrangement at the measuring device and optionally from a Terahertz receiver, and to re-adjust the pose of the measuring device by controlling the robot arm. According to aspects, a distance of the measuring device with respect to the surface of the object is determined by employing data from the sensor arrangement of the measuring device. According to aspects, an orientation of the measuring device with respect to the surface of the object is determined by employing data from the sensor arrangement of the measuring device. According to aspects, an optical pattern is projected from the measuring device onto the surface of the object, and wherein a reflection of the optical pattern is sensed by the sensor arrangement of the measuring device. According to aspects, measurements are carried out sequentially for a plurality of predefined measurement locations on the surface of the object, and wherein the processing of the detected response signal includes calculating at least one of the following coating parameters of the paint film and/or, if present, of at least one of the first and second coating layers: (a) a thickness; (b) a paint type identifier characterizing a type of paint contained in at least one layer of the coating, such as water-borne or solvent-borne paint; (c) a specific weight of at least one layer of the coating, wherein the weight of the layer is optionally obtained from at least one of the index of refraction and the paint type identifier of the layer; (d) a defect parameter indicating a defect in at least one layer of the coating; (e) a total number of layers of the paint film.

Next, some aspects relating to the **coated body** are described in more detail. According to one aspect, the coating is multi-layered having at least a first and a second coating layer. The layers are arranged, in thickness direction of the coated body, on top of one another. According to an aspect, the total number of coating layers is eight or less. According to an aspect, the coating is less than 200 $\mu$m thick. According to aspects, the coated body is one of an automobile component, a train component, an aircraft component, and a wind turbine component, and the coated body comprises at least one of a ferrous metal, a non-ferrous metal, and a fiber composite material as a substrate, and wherein the coating is a paint film, and wherein the coating unit is preferably adapted for applying at least one of the following layers of the paint film: (a) An e-coat layer, (b) A primer layer, (c) A base coat layer, (d) A clear coat layer, or a combination of (a)-(d). According to a further aspect, the coated body is one of an automobile component, a train component, an aircraft component, and a wind turbine component. According to a further aspect, the coated body comprises at least one of a ferrous metal, a non-ferrous metal, and a fiber composite material as a substrate on which the coating layer is applied (optionally with other coating layers in between).

Next, some aspects relating to the **positioning system and the measuring device** are described in more detail. According to an aspect, the measuring device is movable with at least one (lateral) degree of freedom. According to an aspect, the Radiation emitter and radiation receiver are configured for moving in at least two dimensions (two lateral degrees of freedom) along a surface of the coated body, thereby generating a position-dependent thickness map of the coating. For example, this aspect may be useful for mapping a surface area of the coated body. According to an aspect, the positioning system is adapted for moving the movable unit with at least 2 degrees of freedom, preferably with at least 3 degrees of freedom (e.g. 2 or 3 lateral degrees of freedom), and most preferably with 6 degrees of freedom, i.e. three lateral and three rotational degrees of freedom.

Next, some aspects relating to the **THz system** are described in more detail. According to an aspect, a **radiation guide cable** is a flexible fiber-optics cable. The radiation guide cable may be at least 3m, preferably at least 5m long. This allows the movable unit to have sufficient room for movement. In addition, a light source is then allowed to be sufficiently far away from the coated body and also sufficiently shielded, so that a danger of fire or explosions due ignition of the solvent containing ambient by the energetic light pulse is reduced.

According to an aspect, the **radiation receiver** typically comprises a THz radiation receiver and a THz optical system (e.g. one or more lenses) for directing the THz radiation having interacted with the coated body to the THz radiation receiver. The radiation receiver further comprises a flexible second radiation guide cable, coupling the THz radiation receiver to the laser source, so that the THz radiation receiver is enabled to receive the source laser radiation from the laser source.

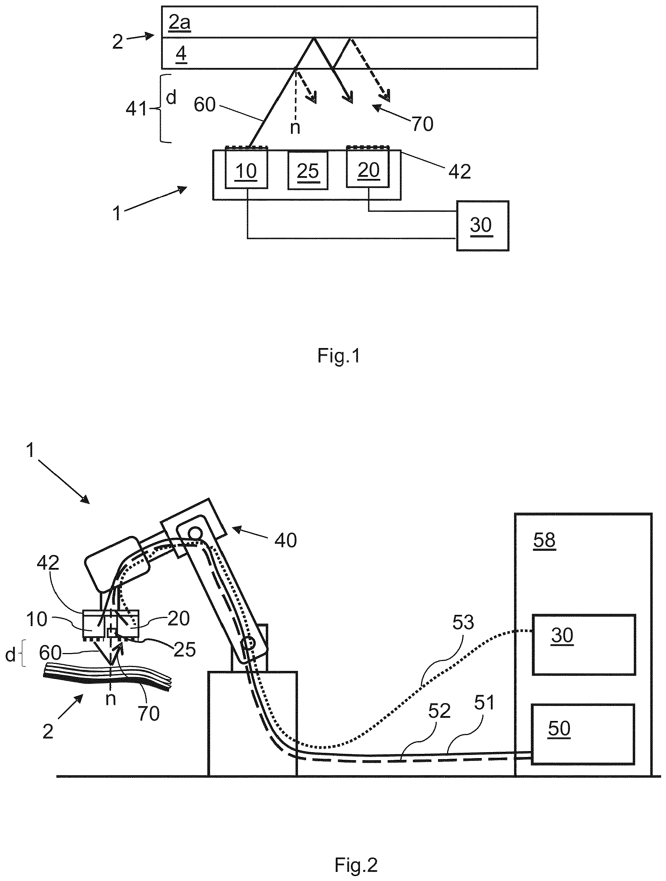

The radiation receiver optionally further comprises a light delaying unit adapted to delay the laser source radiation by a variable delay time, and the THz radiation receiver is coupled, in any order, to the laser source via the flexible second radiation guide cable and the light delaying unit. Thereby, the laser source radiation can be received by the THz radiation receiver in a delayed manner. This allows the radiation receiver to function in an analogous manner as the radiation receiver shown in Fig. 1 of EP 2 213 977 A1, with the important difference that the laser source and the THz radiation emitter / receiver are movable with respect to one another.

According to a further aspect, the THz radiation receiver comprises a photonic crystal or an antenna, and/or the THz radiation emitter comprises an antenna or a Cherenkov phase-matched THz generation module, for example. The photonic crystal may comprise, e.g., DAST, GaP, ZnTe; the photoconductive antenna may comprise, e.g., InGaAs or GaAs. According to a further aspect, the THz radiation emitter/receiver is adapted for emitting/receiving the THz radiation signal as periodic THz pulses.

Herein, THz radiation is defined as electromagnetic radiation of (i.e. including a non-negligible signal component having) a frequency in the range of 0.01-10 THz. The lower bound is preferably 0.05 THz and even more preferably 0.1 THz. The detected signal (e.g. time-domain waveform and/or frequency-domain spectrum of the detected THz radiation) is also referred to as the response signal.

Next, some aspects relating to **further input data** are described in more detail. According to a further aspect, the sensor system further comprises at least one of an air moisture sensor, a temperature sensor and a clock operationally coupled to the control unit. Some or all of the sensors may be carried by the movable unit and attached to the control unit by a flexible cable such as an electrically conductive cable.

Next, some aspects relating to the **geometrical arrangement** of the sensor system are described in more detail. According to an aspect, the emitter system and the radiation receiver may be arranged in a manner on the movable unit configured such that they are, in an operating state, on the same side of the coated body. This is particularly advantageous in the case that the substrate of the coated body is reflective to the THz radiation, e.g. a metal substrate of an automotive body.

Generally, it is preferred (but not required) that the emitter system and the radiation receiver are arranged such that their lines of sight coincides. This allows the THz radiation to impinge on the coated body in a direction normal to its surface. For example, according to an aspect, the THz optical system may comprise a semitransparent THz reflector as beam splitter. The beam splitter may be arranged at an angle with respect to the coated body sheet, such that an optical path from the emitter system and an optical path to the radiation receiver are guided to/from a common optical path that is substantially perpendicular to the coated body. As a result, the emitter system and the radiation receiver are arranged for respectively emitting and detecting light rays having a right angle of incidence with respect to the coated body .

Other arrangements are possible as well. For example, the emitter system and the radiation receiver can be arranged for being, in an operational state, on opposite sides of the coated body for performing a transmission measurement. This is particularly useful if the substrate of the coated body is at least partially transparent to THz radiation (e.g. transmission of at least 0_ 1% of the beam intensity of the THz radiation).

Next, some aspects relating to the **processing** of the detected response signal are described. The sensor system is configured for characterizing a coated body by any method or method steps described herein. Herein, the term "configured for" includes that the control unit is equipped and programmed to this effect. For this purpose, a memory of the control unit may be equipped with program code for causing a processor of the control unit to execute the method according to any aspect described herein. According to a further aspect, the control unit has a memory containing code therein causing the processor to perform the method steps.

According to an aspect, a method of characterizing the coated body by at least one coating parameter based on fitting to a physical model is provided. The method comprises: emitting, by the Radiation emitter, a THz radiation signal towards the coated body such that the THz radiation interacts with the polymeric coating; detecting, by the radiation receiver, a response signal being the detected THz radiation signal having interacted with the polymeric coating; determining, by the control unit, model parameters of the physical model by optimizing the model parameters such that a predicted response signal of the physical model is fitted to the detected response signal, the model parameters being indicative of optical properties of the polymeric coating describing the interaction of the THz radiation signal with the polymeric coating; and determining, from the determined model parameters, at least one coating parameter. The at least one coating parameter may include a thickness of the polymeric coating and/or other parameters described herein.

Next, some aspects relating to the **algorithm** for fitting the predicted response to the detected response signal and for finding the model parameters are described in more detail. The algorithm is based on a physical model, i.e. a function outputting a predicted response signal based on model parameters as input variables.

The model parameters may include quantities of interest such as an index of refraction or a parameterization thereof. According to an aspect, the model parameters of the physical model are determined by optimizing the model parameters such that a predicted response signal of the physical model is fitted to the detected response signal. The algorithm includes the following input data: a reference waveform (in time domain) or reference spectrum (in frequency domain) or some other signal sequence describing the emitted THz radiation signal not having interacted with the coated body, and the detected response having interacted with the coated body. In addition, other parameters characterizing the coated body may be inputted, such as known properties of the coating (e.g. a known parametrization of its index of refraction), known number of layers of coating layer, known thickness of some layers if available, temperature of the coated body, etc. Likewise, other parameters characterizing the ambient medium may be inputted, such as an ambient moisture and / or a temperature. Any of these parameters can, according to a further aspect, alternatively also be obtained as input parameter which is then determined by the fitting algorithm described herein.

Preferably, an iterative algorithm is used. The iterative algorithm includes the following steps: (a) calculating a simulated (predicted) response based on the physical model using an initial guess for the model parameters; (b) calculating an error function expressing a deviation between the predicted response and the detected response; (c) iterating steps (a) and (b), whereby instead of the initial guess in step (a) the model parameters are updated in order to reduce the error function. These steps (a) and (b) are iterated until the error function satisfies a best-fit criterion. Finally, (d) obtaining the fitted parameters as the final parameters satisfying the best-fit criterion in step (c). Then, at least some of the coating parameters (e.g. thickness) are calculated from the fitted model parameters.

The coating parameters are thus determined by calculating a best-fit response as a function of the model parameters, such that the best-fit response satisfies a predetermined best-fit criterion for an error function expressing a deviation between the predicted response and the detected response. The best-fit criterion may include a minimization criterion for the error function. The error function may include, e.g., the $L^2$ norm of the difference between the predicted response signal and the measured response signal.

Once the model parameters are determined, at least some of the coating parameters are then calculated from the model parameters.

Next, some aspects regarding the **model parameters** of the physical model are described in more detail. According to an aspect, the model parameters are indicative of optical properties of the coating layer describing the interaction of the THz radiation signal with the coating layer, and thereby allow calculation of a predicted response signal using the physical model. Also, once the best-fit model parameters are determined, the model parameters allow calculation of the coating parameters.

According to an aspect, the model parameters may include, for example, at least one of the index of refraction, indices of transmission and reflection, and a parameterization thereof. If multiple layer(s) of the coating are present or expected, the model parameters may include any of the parameters for each of the layers, e.g. a thickness of each layer. In addition, the model parameters may include the number of layers.

Preferably, the physical model and the model parameters enable a parameterization of the index of refraction and / or of the transmission and reflection coefficients such that these quantities have a frequency dependence (e.g. by describing at least one resonance contributing to the index of refraction). In an example, a frequency dependence can be obtained by expressing the transmission and/or reflection coefficients in terms of a frequency-dependent index of refraction of each layer. The frequency-dependent parameterization is preferably based on physical considerations. Preferably, the model parameters allow the index of refraction and / or the transmission and reflection coefficients to be expressed as complex numbers, i.e. they allow a non-zero imaginary part of these quantities.

In the following, possible model parameters for parameterizing a frequency-dependent index of refraction $n(\omega)$ of one coating layer of the coated body, $\omega$ being frequency, are given by means of example. Namely, the functional form of $n(\omega)$ may be expressed using the following parameterization that approximates the expected frequency dependence:

$$n(\omega)^2 = n_0^2 + \sum_k n_k^2 * p_k(\omega) \tag{1}$$

Herein, k=1..N is an index (N being a natural number, e.g. N=1), and $n_0$, $n_k$, are the model parameters, and $p_k(\omega)$ is a frequency dependent function that represents physical phenomena in the coating layer. The parameterization of equations has not only the advantage of approximating the expected form of an index of refraction of a coating layer well, but also allows for a physical interpretation of the frequency-dependency being caused by physically relevant modes in the coating layer, e.g. absorption modes.

According to an aspect, the processing of the detected response signal includes calculating at least one of the following coating parameters of the at least one coating layer: (a) a thickness of each coating layer and/or of of the entire coating; (b) a paint type identifier characterizing a type of paint contained in at least one layer of the coating, such as water-borne or solvent-borne paint (other possible identifiers include a type of pigments or additives). The paint type identifier is optionally obtained from, possibly among others, a parameter characterizing the frequency-dependence of the index of refraction of the respective layer; (c) a specific weight of at least one layer of the coating, wherein the weight of the layer is optionally obtained from at least one of the index of refraction and the paint type identifier of the layer; (d) a defect parameter indicating a defect in at least one layer of the coating; (e) a total number of layers of the paint film.

Next, some aspects regarding the determining of the **identification of possible defects** is described. According to an aspect, the model parameters may further include a parameter indicating the number of layers of the coating (e.g. as an integer-valued fitting parameter) for determining the number of layers, and / or for identifying a possible defect in coating, such as gas bubbles. The defect is detected as a jump (increase by 1) in the number of layers at a given location. This is possible because the defect interacts with the THz radiation like an additional "layer" of low index of refraction, present only at the given location. Due to the high difference in index of refraction with the surrounding coating layers, the optical contrast is high, and reliable detection of the defect is possible.

Hence, according to an aspect of the invention, a defect is detected by determining the number of layers as a function of location, and by registering a local variation in the number of layers. The defect area may then be determined as an area having an increased number of layers relative to its surrounding. Thereby, the size of the defect may be determined as the size of this area. Within this area, also the index of refraction of the defect may be determined, and therefrom optionally a type of defect may be determined.

Next, some aspects relating to the characterization of a **wet paint layer** are described. Herein, a wet paint layer is defined as a layer that has not yet fully dried, and that still has a liquid component. According to an aspect, the model parameters and/or the coating parameters (sometimes also referred to as paint layer parameters) include a current wet layer thickness and optionally a predicted dry layer thickness of the wet layer. Namely, according to an aspect of the invention, the determining step includes determining the predicted dry layer thickness.

According to an aspect, the determining of the predicted dry layer thickness includes determining a dry-fraction parameter indicative of a relative amount of a dry portion of the wet paint layer, and determining the predicted dry layer thickness as a function of the dry-fraction parameter (which does not exclude dependence on other parameters such as the current wet layer thickness). The predicted dry layer thickness may, for example, be determined as a product of the dry-fraction parameter and the current wet layer thickness.

According to an aspect, the calculation of the dry-fraction parameter is based on the Bruggeman effective medium theory. Herein, the model parameters parametrizing the refractive index (via an effective dielectric function $\varepsilon$eff of the wet paint layer) include the dry-fraction parameter, a stored dielectric function $\varepsilon$dry of the dry component, and / or a stored dielectric function $\varepsilon$corr of a wet part of the wet paint layer.

Another aspect for determining the predicted dry layer thickness is based on a predetermined function stored in a memory of the controller, which outputs the predicted dry layer thickness as a function of prediction-relevant input parameters such as the wet layer thickness. The prediction-relevant parameters may include model parameters, other paint layer parameters, or parameters obtained from other sources such as another sensor element (e.g. temperature sensor and/or a clock). In particular, the prediction-relevant parameters comprise parameters describing at least one of the current thickness of the wet layer, the type of paint, and the elapsed time since the paint deposition. The prediction-relevant parameters may further contain at least one of the following: humidity; temperature; wet layer thickness at a first time; and wet layer thickness at a second time.

Next, some aspects relating to the method and **facility for painting a body** are discussed. According to an aspect, the painting facility comprises a painting unit for applying a paint layer to the body (e.g. a paint spraying unit/robot for applying a water-borne paint or a solvent-borne paint); and a sensor system with a measuring device as described herein. The painting facility may be a paint line of an automobile factory. The painting unit and the sensor system may be provided in a single paint booth, which allows for immediate quality control of the paint layer. Alternatively, the painting unit and the sensor system may be provided in different booths, which allows for quality control of the paint layer during flash-off and/or curing. According to an aspect, the painting unit is separated from the sensor system by a distance of less than 50 m or even less than 20 m.

According to an aspect, the sensor system is adapted for characterizing the wet paint layer while the body is still being painted and/or while the wet paint layer has not yet finished the drying process. Optionally, the sensor system is operationally coupled to the painting unit for further processing the coated body in dependence of the characterized wet paint layer, e.g. of the obtained coating parameters. For example, the painting unit may be configured for adapting painting parameters in response to the coating parameters. Alternatively, the sensor system is operationally coupled to a further painting unit for further processing the coated body in dependence of the characterized wet paint layer. The further processing may include removing the coated body from the processing line temporarily (e.g. for re-painting) or permanently. The further processing may also include removing the paint and/or applying further layer(s) of paint, preferably while the wet paint layer is not yet dry.

Aspects of the invention allow quality control of painted bodies, e.g., automobile components, while they are being processed. This allows early quality control while the painted surfaces are still wet, and correspondingly early separation between correctly painted bodies and ones with defects. Due to the early separation, the process lead time can be decreased and parameters of the painting process can be adapted in short time. The sensor system and quality control method can be used for on-line, in-line, at-line and off-line quality control, but is preferred to be used in-line.

The sensor system according to the invention is especially applicable in the case that the coating is a paint film having one or more layers of wet paint layer. One use of the sensor system is for the analysis / painting of a painted automobile body or a painted automobile component. Another use is for the analysis / painting of a train body / component, an aircraft body / component such as an aircraft fuselage, aircraft wing, or the like. Another use is for the analysis / painting of a wind turbine component, in particular of a painted blade of a wind turbine. The substrate body may comprise at least one of a ferrous metal, a non-ferrous metal, and a fiber composite material. For example, an application of the present aspect of the invention is defect detection in blades of wind turbines e.g. for off-shore purposes. Here, the coated body is a wind turbine blade containing a defect below the wet paint layer.

Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations, since the full scope of present invention is only limited by the appended claims.

Within the following description, a paint film, possibly comprising several layers, is used as an example for the coating. It is appreciated that the teaching applies, likewise, to other coatings, in particular polymeric coatings.

Within the following description of the drawings, the same reference numbers refer to the same or to similar components. Generally, only the differences with respect to the individual embodiments are described. Unless specified otherwise, the description of a part or aspect in one embodiment applies to a corresponding part or aspect in another embodiment as well. Fig.1 is a schematic side view illustrating basic components, in particular the measuring device 42, and general operation of a sensor system 1 according to an embodiment of the invention, as is further laid out below with respect to Fig. 2. The sensor system 1 has a radiation emitter 10 for emitting radiation, which is preferably Terahertz radiation, a radiation receiver 20 for detecting/receiving radiation, preferably Terahertz radiation, and a control unit 30 operationally coupled to the emitter system 10 and the radiation receiver 20. Further, the measuring device 42 has a sensor arrangement 25 for sensing an orientation and optionally a distance of the measuring device 42 with respect to a surface of the object 2, also called interchangeably "coated body 2" or "body 2". The coated body 2 is arranged such that it is faced by the measuring device 42 including the radiation emitter 10 and the radiation receiver 20.

While the employed concepts may be realized with radiation of varying wavelengths, in the following it is assumed, not to be intended as limiting, that the radiation used is Terahertz radiation, used in the inspection of a coating on a painted car body.

The coated body 2 has a substrate 2a and a paint coating 4. In Fig. 1, the paint coating 4 has one layer. This is shown only by means of illustration, and the paint coating 4 may alternatively be a paint stack having more than one layer, e.g. two or three or four layers. According to a preferred aspect, the described method and sensor system is available for a multi-layered paint coating having at least two layers.

Fig. 1 also shows the path of a THz radiation signal 60 emitted from the radiation emitter 10. The THz radiation signal 60 (solid line) traverses the distance d of the air gap 41 and the coated body 2, whereupon it interacts with the coated body 2. A portion of the THz radiation signal, indicated by the solid line in Fig. 1, is reflected at the surface of substrate 2a and propagates back through the air gap 41 and towards the radiation receiver 20. Other portions of the radiation signal 60, indicated by the dashed lines in Fig. 1, are partially reflected at various layer interfaces of the coated body 2 (more precisely, they are (almost fully) reflected at the substrate side and partially reflected at the air side of the coating 4), and eventually propagate back towards the radiation receiver 20 (as "THz response signal" or "reflected radiation signal" 70), and are detected therein. Besides these reflections, also the propagation speed of the various portions of the THz radiation is influenced during their interaction with the coated body 2. In this manner, the detected THz signals 70 carry detailed information about the paint coating 4 of the coated body 2.

The principal characterization of paint layers on solid bodies/surfaces by means of Terahertz radiation is a well-known method, and the details of analysing characteristics of the coating, or of different paint layers thereof, can be regarded to be well-known to the skilled person. Details on the characterization process, also under consideration of wet or partially dry layers, are laid out in the patent application EP 2899499 A1.

In Fig. 1, the radiation is shown to propagate along an angle with respect to the normal direction n of the coated body 2.

Fig.2 is a schematic side view of a sensor system 1 according to an embodiment of the invention. The Figure again shows the coated body 2, and the sensor system according to an embodiment of the invention. The sensor system has a THz system with a laser source 50, a Radiation emitter 10, a radiation receiver 20, flexible radiation guide cables 51, 52 connecting the laser source 50 to the radiation emitter 10 and the radiation receiver 20, respectively, for transmitting the source laser radiation generated by the laser source thereto. The sensor system further has a positioning system, realized as a robot arm 40 comprising a measuring device 42 which is movable and which carries the radiation emitter 10 and the radiation receiver 20.

The sensor system further has a control unit 30. The control unit 30 is equipped with a processor and with a memory in which software code is stored enabling the processor to carry out any method described herein. The control unit 30 is operationally coupled, via an electrical cable 53, to the radiation receiver 20 for receiving and processing a detected response signal representing the detected THz radiation. The control unit 30 may further be coupled to the radiation emitter 10 (via a cable not shown) for controlling the THz generator, e.g. electrically manipulating the THz generator by applying, for example, a bias voltage to it. Further, the radiation emitter may receive and processing an emitted THz signal representing the emitted THz radiation. Alternatively, the control unit 30 may contain a memory region for storing the emitted THz signal as a pre-stored signal (e.g. from a measurement by the radiation receiver in which the coated body 2 is replaced by a simple THz reflector).

The robot arm 40 allows the radiation emitter 10 and radiation receiver 20 to be positioned relative to the coated body 2, by moving the measuring device 42. Thereby, the radiation emitter 10 and radiation receiver 20 are movable relative to the laser source 50 which is arranged outside of the measuring device 42. During this motion, the radiation emitter 10 and radiation receiver 20 keep being coupled to laser source 50 via the flexible radiation guide cables 51, 52.

The laser source 50 may further contain optical means to delay the laser light from the laser source 50, optical means to shorten its pulse width, optical means to further correct it for artefacts which will occur during guiding along the cable 51 (and 52), and optical means to detect the laser light. Also, while the description focuses on a laser source, also another light source can be used.

According to a general aspect illustrated in Fig. 2, the laser source 50 and the control unit 30 are arranged in a common housing 58, which may be at least 5 m or even at least 10 m spaced apart from the radiation emitter 10 and radiation receiver 20, in at least one position of the robot arm 40. The housing 58, or at least the laser source 50, may be arranged in the same room / cubicle as the radiation emitter 10 and radiation receiver 20, or in a separate room / cubicle. With the separate arrangement, fire and explosion risk due highly energetic light pulses and/or electrical equipment near the evaporating solvents can be reduced significantly. Also, the THz components on the measuring device 42 can be provided more compactly, which allows shielding them, and in particular a THz generator (not shown) in the radiation emitter 10, more easily against inflammable gases. Hence, according to an aspect, the THz generator is provided in a gas-tight housing and/or in an electromagnetically shielded housing.

The robot arm 40 can be a floor or wall mounted robot and have an arbitrary number of degrees of freedom for the measuring device 42, e.g. at least two or even all six degrees of freedom. This allows the radiation emitter 10 and radiation receiver 20 to move around the coated body 2 and to reach all of its major surfaces. The robot arm 40 is adapted for moving the measuring device 42 with at least 2 degrees of freedom, preferably with at least 3 degrees of freedom, and most preferably with 6 degrees of freedom.

The robot arm 40 allows a quality control process during which the sensor system adapts its position relative to the coated body 2 such that it scans the body and maps out the quality control parameters as a function of location, e.g. on a predefined grid. To this purpose, the robot is programmed to move in a fixed pattern along all parts of the body surface while measuring the THz radiation 70 having interacted with the surface. For the coated body being an automobile body, and for a 10x10 cm$^2$ grid size (corresponding to about 1000 points over the whole coated body ), this is possible within 5-10 seconds. 5-10 seconds is only a fraction of the time an automobile spends in the flash-off zone. To enable the above, the shape and dimensions of the body 2 may in embodiments be loaded as a 3D model into a memory of the control unit 30.

The scanning pattern itself may depend on the analysis method. Normally, the coated body 2 is scanned only once. However, the coated body 2 may be scanned twice with a predetermined time (e.g. 1-2 minutes) between two measurements at the same location, if two current wet thicknesses are desired, e.g. for predicting the dry layer thickness.

In embodiments, the measuring device 42 carries a sensor arrangement 25. The sensor arrangement enables a precise and quick positioning of the measuring device 42 with respect to a surface of the coated body 2. The robot arm 40 is operatively coupled via the control unit 30 to the sensor arrangement 25. The control unit 30 is configured for adapting a motion of the measuring device 42, as moved by the robot arm 40, such that the distance d with respect to the coated body 2 is adjusted. The distance d is, in particular, adjusted for focusing the THz radiation emitted / detected by the radiation emitter 10 / receiver 20. In the embodiments described herein, the control unit 30 is adapted to position the measuring device 42 via the robot arm 40 so that by taking into account positioning data of the robot arm 40 and measurement data from the sensor arrangement 25, prior to carrying out a measurement at a predefined measurement location, a distance between the measuring device 42 and the surface of the coated body /object 2 is adjusted to be in a predefined range of distance d. Further, the control unit 30 controls the robot arm 40 so that a vector n of the measuring direction of the measuring device 42 is adjusted to be normal with respect to the surface of the object 2. As the measuring principle allows for a certain deviation from a normal direction, the positioning may be carried out within an angular tolerance range about the normal direction.

In the following, it is described how the sensor arrangement 25 may be configured, and how it is employed for positioning the measuring device 42 via the control unit 30.

The sensor arrangement may be configured to detect an angular orientation of the measuring device with respect to a surface of the coated body 2. Further, the sensor arrangement 25 may also be employed to detect the distance d between the measuring device 42 and the surface. In embodiments, the latter may be employed, and/or the distance d may also be derived by the control unit 30 from the detected reflected THz signal 70. In this case, the information from the sensor arrangement 25 is only employed for determining the angular orientation of the measuring device 42 with respect to the surface of the coated body 2.

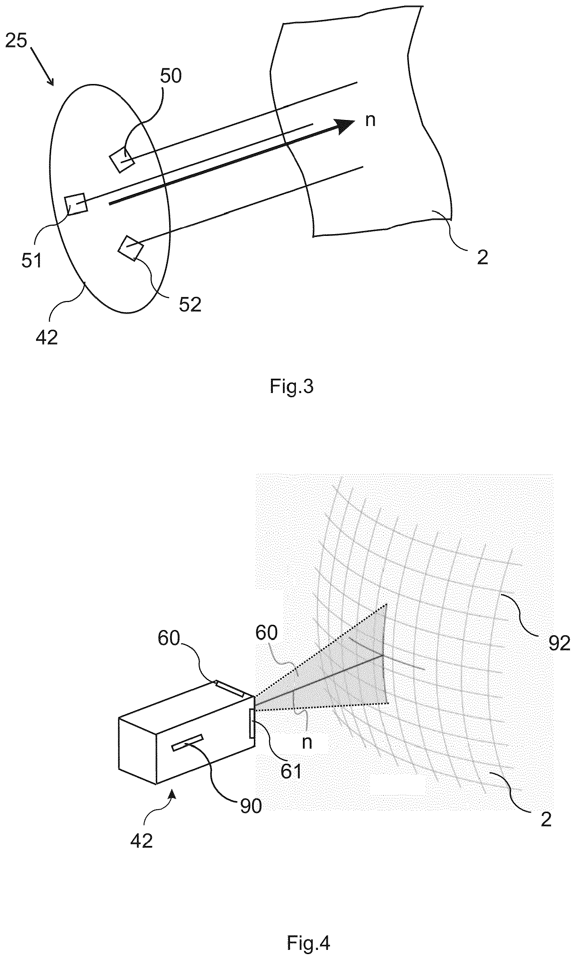

In embodiments, the sensor arrangement 25 may be realized in a number of ways, which may also be at least partially combined with each other. In a first variant as shown in Fig. 3, at least three distance sensors 50, 51, 52 are part of the sensor arrangement 25, which is mounted to the measuring device 42. With these three sensors, which may for example be adjusted to measure a distance in the same direction, but parallel to the measurement direction n with a geometrical offset, an orientation of the normal vector of the measuring device 42 with respect to the surface of the coated body 2 may be determined.

In Fig. 4, a variant is shown in which the sensor arrangement 25 comprises at least two line segment sensors 60, 61 (only schematically shown). They are configured to detect a line pattern 92 on the surface. To this end, the measuring device 42 typically further comprises a projecting device 90 for projecting, preferably in the visible range or the infrared range, an optical pattern 92 as shown onto the surface of the coated body /object 2. The optical pattern 92 is projected while being substantially centered about the measurement direction n. The optical pattern 92 preferably comprising either or more of a line pattern, preferably an orthogonal line pattern such as shown in Fig. 4, and/or a graphical pattern including, e.g., curves.

In a further variant, the sensor arrangement 25 may comprise a 3D scanner 70, such as a known raster-based 3D scanner. The 3D scanner provides a 3D model of the surface of the painted body 2 to the control unit 30. Typically, the target field of the 3D scanner is adjusted to be substantially centered about the measurement direction n. Thus, the control unit 30 calculates the angle at which vector n impinges on the scanned surface. The orientation of the measuring device 42 is then adjusted accordingly by the robot arm 40, by command of the control unit 30. In a similar embodiment, instead of a 3D scanner, a time-of-flight 3D camera 75 is employed. A non-limiting example of such a camera is the product Microsoft Kinect.

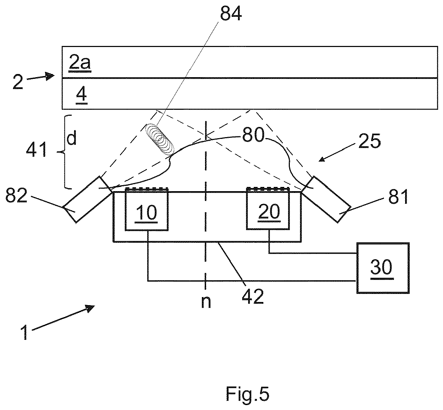

In embodiments of the invention, a deflectometry system 80 is employed. A basic deflectometry system 80 as applied in a measuring unit 42 of a sensor system 1 of embodiments is shown in Fig. 5. The deflectometry system 80 is based on the detection of an image 84, for example including an optical pattern, on the surface of the coated object 2. The image 84 (only schematically shown) is produced by a screen 82, and is reflected by the surface of the coated object 2. A camera 81 is directed to the surface of the coated object 2. The camera 81 is operably connected (not shown) to the control unit 30, as well as the screen 82. In the control unit 30, an algorithm constantly analyses the reflected image recorded by the camera 81. By using image analysis, the control unit 30 may calculate the distance of the surface as well as the topology of the surface. Thus, the control unit can determine if the measuring unit 42 is positioned in a distance d within the defined distance range from the surface of the coated object 2. Further, it may correct the pose (meaning 3D position and angular orientation) of the measuring unit 42 until the vector n of the measuring direction is normal with respect to the surface, and can correct the measuring unit 42 until the vector n impinges on the calculated surface at a predefined measurement position. Subsequently, the measurement is carried out. Further, in embodiments, the control unit may also be configured to detect surface irregularities of the coated body 2, by analysing irregularities of the reflected image and comparing them with the projected image by the screen 82. Thus, additionally to the THz based measurement of the at least one paint layer, and additional dimension of quality control may be added. The deflectometry system 80 may be combined with other options for the sensor arrangement 25 according to embodiments as described herein. The predefined distance range for distance d may be from about 5 cm to about 25 cm, more typically from 10 cm to 20 cm. The angular tolerance range with which the angle of the normal vector indicating the measurement direction n, may deviate when compared to the normal vector on the surface, may be from -5° to 5°, or more preferably from -2° to 2°.

Using the information about the measured distance d, derived either from the Terahertz signal and/or the sensor arrangement 25, and the angular alignment/orientation of n as described above, the robot arm 40 is controlled by the control unit for moving the measuring device 42 towards the coated body 2 while the distance and position are constantly measured. At the distance which corresponds to the desired distance d of the THz optics, the robot arm 40 starts moving the measuring device 42 for scanning the automobile body in a predefined pattern, while keeping the head always at the appropriate distance (within the predefined distance range/band) from the surface 2 of the coated body 2.

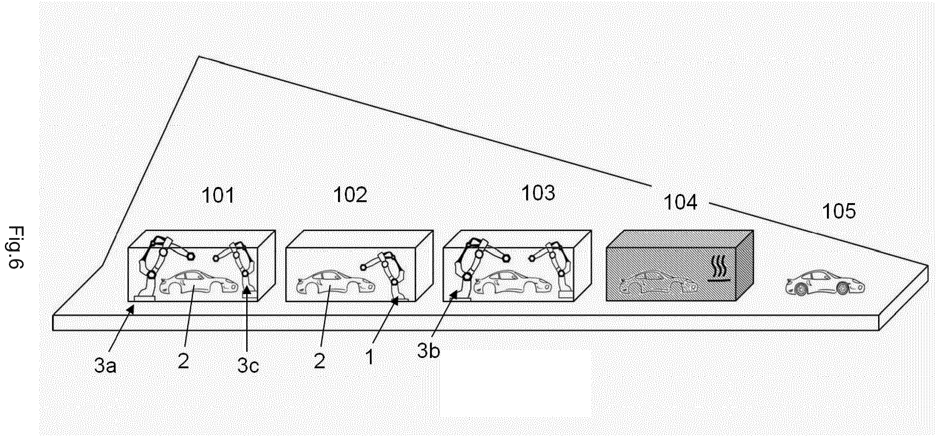

Next, a paint system and a painting process using the system according to the invention are described with reference to Fig.6. In the following, the painting of an automobile is described as an example, but the example can be generalized to the coating of other bodies.

Fig. 6 shows a schematic drawing of the paint system being a paint line. The paint line has a number of cubicles for e.g. painting, flash-off, quality control, readaptation of the painting and curing, namely a paint booth 101, a cubicle (flash-off zone) 102 for quality control of paint based on THz technology with a sensor system 1 according to embodiments, an (optional) further paint booth 103 for correcting the paint layers, a heated cubicle (furnace) 104 for curing the paint, and an exit 105 towards the next processing step.

The paint system may include further: A transportation mechanism for transporting the coated body 2 from the paint booth 101 through the other cubicles towards the exit 105; climate control in each cubicle; a temperature and humidity sensor in each cubicle; robots which are equipped for at least one of painting the automobile body; being sensor systems 1 for performing quality control of the painted bodies; or handling robot(s) for carrying the painted bodies.

Next, the individual cubicles and their functionality in the paint system of Fig. 6 are described in more detail. The paint booth 101 has a painting unit (painting robot) 3a for applying a paint layer to the body 2. Optionally, more than one paint layer may be applied. A further robot 3b is provided for handling the automobile component, e.g. moving it for being painted properly. Subsequently the transportations system moves the body to the flash-off zone 102, where early quality control based on THz technology is performed.

The flash-off zone 102 has a sensor system 1 according to the invention for quality control right after the paint deposition, preferably while the paint is still wet. Thereby, an early observation of possible defects on the painted surface is possible. As described above, the sensor system 1 is configured to scan the automobile body with a predefined pattern, such as to obtain quality parameters, such as at least one of the thickness of the wet paint and a prediction of the dry state thickness and information about other possible defects. This information may be mapped onto the entire scanned automobile body surface. Thus, the sensor system 1 enables non-contact and non-destructive early quality control of the freshly deposited paint layers on automobile bodies while being processed in the paint line.

If a fault is sensed by the sensor system 1, the automobile body 2 can be removed from the main line at an early stage, such that it is ensured that the downstream line only contains bodies which are correctly painted. Moreover, by providing the sensor system 1 in the flash-off zone, where the body anyway has to wait for the solvent to partially evaporate, the quality control does not take up any extra time and on the contrary strongly reduces the lead time of the correctly painted bodies by enhancing the efficiency of the main paint line.

Optionally, the automobile body 2 may undergo an additional corrective painting step either in the flash-off zone 102 or, after being transported back, in the paint cubicle 101, or in an optional further paint cubicle 103 (by further painting robot 3b). The latter option allows the body 2 to stay in the main line.

The painting process typically involves two to three layers. These layers can be deposited all in one paint booth 101 (wet-on-wet technique), or there can be additional paint booths (not shown) and associated cubicles for each additional layer, either after a flash-off cubicle 102 or after a curing furnace 104. Quality control by the sensor system 1 can take place after each paint booth or cubicle or only after a specific one.

Optionally, the paint system may have a close loop feedback control system which receives data from the sensor system 1 in cubicle 102 and sends it directly or indirectly to prior equipment in the process line, such as the paint robot 3a in cubicle 101. An indirect sending would be provided if the data is sent via another entity which has capability other than mere forwarding of the data, e.g. via a control unit which calculates the adapted program for the robot. The close loop feedback system influences the process parameters of the paint robot 3a depending on the data received from the sensor system 1. Alternatively or additionally, the feedback control system may send the data also to later equipment in the process line, such as to paint robot 3b in cubicle 103. The close loop feedback system then influences the process parameters of the paint robot 3b depending on the data received from the sensor system 1.

Thus, the close loop feedback control system can be used in the case that the deviations of the quality parameters resulting from the early quality control are for instance reproducible for several painted bodies 2 and/or seem to be systematic. In these cases the systematic issues can be corrected in a timely manner.

Further alternatives and extensions to the embodiments described herein are possible. Extensions can, for instance, be provided by adding equipment to the system after the early quality control which deals with the consequence of the (negative) outcome.

**Claims**

1. A sensor system (1) for measuring a parameter of at least one paint layer provided on a surface of an object (2), comprising:

   - a robot arm (40),
   - a measuring device (42) mounted to the robot arm (40), comprising:

     - a radiation emitter (10) and a radiation receiver (20), which work in the Terahertz range, for measuring the parameter of the at least one paint layer,
     - a sensor arrangement (25) comprising a deflectometry system (80) including a camera (81) for sensing an orientation and a distance of the measuring device (42) with respect to a surface of the object (2) when the measuring device is positioned in a predefined pose,

     - a control unit (30) configured for controlling the robot arm (40), and for controlling the operation of the measuring device (42),

   wherein the control unit (30) is configured to control a movement of the robot arm (40) with the measuring device (42) about the object (2), for carrying out a measurement of a parameter of the at least one paint layer at at least one predefined measuring location on the surface of the object (2), by taking into account positioning data of the robot arm (40) and measurement data from the sensor arrangement (25) and optionally from the radiation receiver (20), so that prior to carrying out a measurement:

     - a distance between the measuring device (42) and the surface of the object (2) is adjusted to be in a predefined distance range, and
     - a vector of the measuring direction of the measuring device (42) is adjusted to be normal with respect to the surface of the object (2) within an angular tolerance range from -5° to 5°.

2. The sensor system of claim 1, wherein the parameter is a thickness of the at least one paint layer.

3. The sensor system of claims 1 or 2, wherein the sensor arrangement further comprises at least one of the following:

     - at least three distance sensors (50, 51, 52),
     - at least two line segment sensors (60, 61),
     - a 3D scanner (70), and
     - a time-of-flight 3D camera (75);

   and wherein optionally, the sensor system further comprises a network interface for connecting it to a data network, such that the sensor system (1) is operatively connected to the network interface for at least one of: sending device status information to the data network and carrying out a command received from the data network, in particular the data network being at least one of: LAN, WAN or internet (IoT).

4. The sensor system of claims 1 to 3, further comprising a projecting device (90) for projecting, preferably in the visible range or the infrared range, an optical pattern (92) onto the surface of the object (2), wherein the optical pattern (92) is projected while being substantially centered about the measurement direction, the optical pattern (92) preferably comprising at least one of:

     - a line pattern, preferably an orthogonal line pattern,
     - a graphical pattern including curves.

5. The sensor system of any preceding claim, wherein the predefined distance range is from about 5 cm to about 25 cm, and wherein the angular tolerance range is from -2° to 2°.

6. The sensor system of any preceding claim, further comprising at least one 3D sensor (55), and wherein the control unit (30) is configured to determine the position of the object (2) with respect to the robot arm (42) and the measuring device (40) in a 3D coordinate system.

7. The sensor system of any preceding claim, wherein the control unit (30) is further configured to store a predefined 3D model of the object (2).

8. A method for measuring a parameter of at least one paint layer provided on a surface of an object (2), comprising:

- providing a sensor system (1) of any of claims 1 to 7,
- positioning the measuring device (42) at a first measuring pose to measure a parameter of the at least one paint layer at a predefined measuring location on the surface of the object (2), wherein the distance between the measuring device (42) and the surface of the object is adjusted to be in a predefined distance range, and wherein the vector of the measuring direction n of the measuring device (42) is adjusted to be normal with respect to the surface of the object (2) within an angular tolerance range from -5° to 5°,
- emitting at least one radiation signal (60) towards the surface of the object (2),
- receiving a reflected radiation signal (70) that has interacted with the paint layer,
- calculating a parameter of the paint layer using the reflected radiation signal (70).

9. The method of claim 8, wherein positioning the measuring device (42) at a first measuring pose comprises moving the measuring device (42) to a predefined pose, to determine the distance of the measuring device to the surface and the angular orientation with respect to the surface by using signals from the sensor arrangement (25) at the measuring device (42) and optionally from the Terahertz receiver (20), and to re-adjust the pose of the measuring device (42) by controlling the robot arm (40),

and wherein optionally, the sensor system (1) comprises a network interface for connecting it to a data network, such that the sensor system (1) is operatively connected to the network interface for at least one of: sending device status information to the data network and carrying out a command received from the data network, in particular the data network being at least one of: LAN, WAN or internet (IoT).

10. The method of claims 8 or 9, wherein a distance of the measuring device (42) with respect to the surface of the object (2) is determined by employing data from the sensor arrangement (25) of the measuring device (42).

11. The method of any of claims 8 to 10, wherein an orientation of the measuring device (42) with respect to the surface of the object (2) is determined by employing data from the sensor arrangement (25) of the measuring device (42).

12. The method of any of claims 8 to 11, wherein an optical pattern (92) is projected from the measuring device (42) onto the surface of the object (2), and wherein a reflection of the optical pattern is sensed by the sensor arrangement (25) of the measuring device (42).

13. The method of any claim of claims 8 to 12, wherein the object (2) is a coated body (2) having a coating (4), wherein measurements are carried out sequentially for a plurality of predefined measurement locations on the surface of the object (2), and wherein the processing of the detected response signal includes calculating at least one of the following coating parameters of the coating (4) and/or, if present, of at least one of the first and second coating layers (2a, 2b):

(a) a thickness;
(b) a paint type identifier characterizing a type of paint contained in at least one layer (4a) of the coating (4), such as water-borne or solvent-borne paint;
(c) a specific weight of at least one layer (4a) of the coating (4), wherein the weight of the layer is optionally obtained from at least one of the index of refraction and the paint type identifier of the layer;
(d) a defect parameter indicating a defect in at least one layer (4a) of the coating (4);
(e) a total number of layers of the coating (4).

14. The method of claim 8 to 13, wherein the object (2) is one of an automobile component, a train component, an aircraft component, and a wind turbine component, and wherein the object (2) comprises at least one of a ferrous metal, a non-ferrous metal, and a fiber composite material as a substrate, and wherein the coating (4) is a paint film, and wherein a coating unit is provided for applying at least one of the following layers of the paint film:

(a) An e-coat layer
(b) A primer layer
(c) A base coat layer
(d) A clear coat layer

or a combination of (a)-(d).

15. A coating facility, comprising:

- a coating unit for applying at least one coating layer of a coating (4) to the object (2); and
- a sensor system (1) according to any of claims 1 to 7, for characterizing the coating (4) including the applied coating layer by a method of any of claims 8 to 14.

**Patentansprüche**

1. Sensorsystem (1) zur Messung eines Parameters wenigstens einer Lackschicht, die auf einer Oberfläche eines Objekts (2) vorgesehen ist, umfassend:

- einen Roboterarm (40),
- eine Messvorrichtung (42), die an dem Roboterarm (40) angebracht ist, umfassend:
- einen Strahlungsemitter (10) und einen Strahlungsempfänger (20), die im Terahertzbereich arbeiten, zum Messen des Parameters der wenigstens einen Lackschicht,
- eine Sensoranordnung (25), die ein Deflektometriesystem (80) mit einer Kamera (81) umfasst, zum Erfassen einer Ausrichtung und eines Abstands der Messvorrichtung (42) in Bezug auf eine Oberfläche des Objekts (2), wenn die Messvorrichtung in einer vordefinierten Stellung angeordnet ist,
- eine Steuereinheit (30), die zum Steuern des Roboterarms (40) und zum Steuern des Betriebs der Messvorrichtung (42) ausgestaltet ist,

wobei die Steuereinheit (30) dazu ausgestaltet ist, eine Bewegung des Roboterarms (40) mit der Messvorrichtung (42) um das Objekt (2) herum zu steuern, um eine Messung eines Parameters der wenigstens einen Lackschicht an wenigstens einer vordefinierten Messstelle auf der Oberfläche des Objekts (2) durchzuführen, und zwar unter Berücksichtigung von Positionsdaten des Roboterarms (40) und Messdaten von der Sensoranordnung (25) und optional von dem Strahlungsempfänger (20), sodass vor dem Durchführen einer Messung:

- ein Abstand zwischen der Messvorrichtung (42) und der Oberfläche des Objekts (2) so eingestellt wird, dass er in einem vordefinierten Abstandsbereich liegt, und
- ein Vektor der Messrichtung der Messvorrichtung (42) so eingestellt wird, dass er in Bezug auf die Oberfläche des Objekts (2) innerhalb eines Winkeltoleranzbereichs von -5° bis 5° senkrecht ist.

2. Sensorsystem nach Anspruch 1, wobei der Parameter eine Dicke der wenigstens einen Lackschicht ist.

3. Sensorsystem nach den Ansprüchen 1 oder 2, wobei die Sensoranordnung ferner wenigstens eines der Folgenden umfasst:

- wenigstens drei Abstandssensoren (50, 51, 52),
- wenigstens zwei Linienabschnittssensoren (60, 61),
- einen 3D-Scanner (70) und
- eine 3D-Laufzeitkamera (75);

und wobei optional das Sensorsystem ferner eine Netzwerkschnittstelle zum Verbinden desselben mit einem Datennetz umfasst, sodass das Sensorsystem (1) mit der Netzwerkschnittstelle für wenigstens eines der Folgenden wirkverbunden ist: Senden von die Vorrichtung betreffenden Statusinformationen an das Datennetz und Ausführen eines von dem Datennetz empfangenen Befehls, wobei das Datennetz insbesondere wenigstens eines der Folgenden ist: LAN, WAN oder Internet (IoT).

4. Sensorsystem nach den Ansprüchen 1 bis 3, das ferner eine Projektionsvorrichtung (90) zum Projizieren - vorzugsweise im sichtbaren Bereich oder Infrarotbereich

- eines optischen Musters (92) auf die Oberfläche des Objekts (2) umfasst, wobei das optische Muster (92) im Wesentlichen um die Messrichtung herum zentriert projiziert wird, wobei das optische Muster (92) vorzugsweise wenigstens eines der Folgenden umfasst:

- ein Linienmuster, vorzugsweise ein rechtwinkliges Linienmuster,
- ein graphisches Muster mit Kurven.

5. Sensorsystem nach einem vorangehenden Anspruch, wobei der vordefinierte Abstandsbereich etwa 5 cm bis etwa 25 cm beträgt und wobei der Winkeltoleranzbereich -2° bis 2° beträgt.

6. Sensorsystem nach einem vorangehenden Anspruch, das ferner wenigstens einen 3D-Sensor (55) umfasst, und wobei die Steuereinheit (30) dazu ausgestaltet ist, die Position des Objekts (2) in Bezug auf den Roboterarm (42) und die Messvorrichtung (40) in einem 3D-Koordinatensystem zu bestimmen.

7. Sensorsystem nach einem vorangehenden Anspruch, wobei die Steuereinheit (30) ferner dazu ausgestaltet ist, ein vordefiniertes 3D-Modell des Objekts (2) zu speichern.

8. Verfahren zur Messung eines Parameters wenigstens einer Lackschicht, die auf einer Oberfläche eines Objekts (2) vorgesehen ist, umfassend:

   - Bereitstellen eines Sensorsystems (1) nach einem der Ansprüche 1 bis 7,
   - Anordnen der Messvorrichtung (42) in einer ersten Messstellung, um einen Parameter der wenigstens einen Lackschicht an einer vordefinierten Messstelle auf der Oberfläche des Objekts (2) zu messen, wobei der Abstand zwischen der Messvorrichtung (42) und der Oberfläche des Objekts so eingestellt wird, dass er in einem vordefinierten Abstandsbereich liegt, und wobei der Vektor der Messrichtung n der Messvorrichtung (42) so eingestellt wird, dass er in Bezug auf die Oberfläche des Objekts (2) innerhalb eines Winkeltoleranzbereichs von -5° bis 5° senkrecht ist,
   - Aussenden wenigstens eines Strahlungssignals (60) hin zu der Oberfläche des Objekts (2),
   - Empfangen eines reflektierten Strahlungssignals (70), das mit der Lackschicht wechselgewirkt hat,
   - Berechnen eines Parameters der Lackschicht unter Verwendung des reflektierten Strahlungssignals (70).

9. Verfahren nach Anspruch 8, wobei das Anordnen der Messvorrichtung (42) in einer ersten Messstellung umfasst: Bewegen der Messvorrichtung (42) in eine vordefinierte Stellung, um den Abstand der Messvorrichtung zu der Oberfläche und die Winkelausrichtung in Bezug auf die Oberfläche unter Verwendung von Signalen von der Sensoranordnung (25) an der Messvorrichtung (42) und optional von dem Terahertzempfänger (20) zu bestimmen, und Anpassen der Stellung der Messvorrichtung (42) durch Steuern des Roboterarms (40), und wobei optional das Sensorsystem (1) eine Netzwerkschnittstelle zum Verbinden desselben mit einem Datennetz umfasst, sodass das Sensorsystem (1) mit der Netzwerkschnittstelle für wenigstens eines der Folgenden wirkverbunden ist: Senden von die Vorrichtung betreffenden Statusinformationen an das Datennetz und Ausführen eines von dem Datennetz empfangenen Befehls, wobei das Datennetz insbesondere wenigstens eines der Folgenden ist: LAN, WAN oder Internet (IoT).

10. Verfahren nach den Ansprüche 8 oder 9, wobei ein Abstand der Messvorrichtung (42) in Bezug auf die Oberfläche des Objekts (2) unter Verwendung von Daten von der Sensoranordnung (25) der Messvorrichtung (42) bestimmt wird.

11. Verfahren nach einem der Ansprüche 8 bis 10, wobei eine Ausrichtung der Messvorrichtung (42) in Bezug auf die Oberfläche des Objekts (2) unter Verwendung von Daten von der Sensoranordnung (25) der Messvorrichtung (42) bestimmt wird.

12. Verfahren nach einem der Ansprüche 8 bis 11, wobei ein optisches Muster (92) von der Messvorrichtung (42) auf die Oberfläche des Objekts (2) projiziert wird und wobei eine Reflexion des optischen Musters durch die Sensoranordnung (25) der Messvorrichtung (42) erfasst wird.

13. Verfahren nach einem Anspruch der Ansprüche 8 bis 12, wobei das Objekt (2) ein beschichteter Körper (2) mit einer Beschichtung (4) ist, wobei Messungen nacheinander für eine Mehrzahl vordefinierter Messstellen auf der Oberfläche des Objekts (2) durchgeführt werden und wobei die Verarbeitung des erfassten Antwortsignals ein Berechnen wenigstens eines der folgenden Beschichtungsparameter der Beschichtung (4) und/oder, sofern vorhanden, wenigstens einer aus der ersten und zweiten Beschichtungsschicht (2a, 2b) umfasst:

   (a) einer Dicke;
   (b) eines Lackartkennzeichens, das eine Art von Lack, die in wenigstens einer Schicht (4a) der Beschichtung (4) enthalten ist, wie etwa wasserbasierten Lack oder lösungsmittelbasierten Lack, charakterisiert;

(c) eines spezifischen Gewichts wenigstens einer Schicht (4a) der Beschichtung (4), wobei das Gewicht der Schicht optional anhand wenigstens eines aus dem Brechungsindex und dem Lackartkennzeichen der Schicht erhalten wird;

(d) eines Defektparameters, der einen Defekt in wenigstens einer Schicht (4a) der Beschichtung (4) anzeigt;

(e) einer Gesamtzahl an Schichten der Beschichtung (4).

14. Verfahren nach Anspruch 8 bis 13, wobei das Objekt (2) eines aus einem Automobilbauteil, einem Zugbauteil, einem Luftfahrzeugbauteil und einem Windkraftanlagenbauteil ist und wobei das Objekt (2) wenigstens eines aus einem Eisenmetall, einem Nichteisenmetall und einem Faserverbundwerkstoff als Substrat umfasst und wobei die Beschichtung (4) ein Lackfilm ist und wobei eine Beschichtungseinheit vorgesehen ist, um wenigstens eine der folgenden Schichten des Lackfilms aufzubringen:

(a) eine elektrochemisch aufgebrachte Lackschicht
(b) eine Grundierungsschicht
(c) eine Basislackschicht
(d) eine Klarlackschicht

oder eine Kombination von (a)-(d).

15. Beschichtungsanlage, umfassend:

- eine Beschichtungseinheit zum Aufbringen wenigstens einer Beschichtungsschicht einer Beschichtung (4) auf das Objekt (2); und
- ein Sensorsystem (1) nach einem der Ansprüche 1 bis 7 zur Charakterisierung der Beschichtung (4), welche die aufgebrachte Beschichtungsschicht umfasst, mittels eines Verfahrens nach einem der Ansprüche 8 bis 14.


**Revendications**

1. Système de capteurs (1) destiné à mesurer un paramètre d'au moins une couche de peinture disposée sur une surface d'un objet (2), comprenant :

- un bras robotique (40),
- un dispositif de mesure (42) monté sur le bras robotique (40), comprenant :
- un émetteur de rayonnement (10) et un récepteur de rayonnement (20), qui fonctionnent dans la gamme des térahertz, pour mesurer le paramètre de l'au moins une couche de peinture,
- un agencement de capteurs (25) comprenant un système de déflectométrie (80) comportant une caméra (81) pour détecter une orientation et une distance du dispositif de mesure (42) par rapport à une surface de l'objet (2) quand le dispositif de mesure est positionné dans une pose prédéfinie,
- une unité de contrôle (30) configurée pour contrôler le bras robotique (40), et pour contrôler le fonctionnement du dispositif de mesure (42),

dans lequel l'unité de contrôle (30) est configurée pour contrôler un déplacement du bras robotique (40) avec le dispositif de mesure (42) autour de l'objet (2), afin de réaliser une mesure d'un paramètre de l'au moins une couche de peinture à au moins un emplacement de mesure prédéfini sur la surface de l'objet (2), en tenant compte de données de positionnement du bras robotique (40) et de données de mesure provenant de l'agencement de capteurs (25) et éventuellement du récepteur de rayonnement (20), de telle sorte que, avant de réaliser une mesure :

- une distance entre le dispositif de mesure (42) et la surface de l'objet (2) est réglée pour se situer dans une plage de distance prédéfinie, et
- un vecteur de la direction de mesure du dispositif de mesure (42) est réglé pour être perpendiculaire à la surface de l'objet (2) à l'intérieur d'une plage de tolérance angulaire allant de -5° à 5°.

2. Système de capteurs selon la revendication 1, dans lequel le paramètre est une épaisseur de l'au moins une couche de peinture.

3. Système de capteurs selon la revendication 1 ou 2, dans lequel l'agencement de capteurs comprend en outre au moins un des éléments suivants :

- au moins trois capteurs de distance (50, 51, 52),
- au moins deux capteurs de segment de ligne (60, 61),
- un dispositif de balayage 3D (70), et
- une caméra 3D à temps de vol (75) ;

et le système de capteurs comprenant en outre éventuellement une interface réseau pour le connecter à un réseau de données, de telle sorte que le système de capteurs (1) est fonctionnellement connecté à l'interface réseau pour au moins une opération parmi : l'envoi d'informations d'état de dispositif au réseau de données et la réalisation d'une commande reçue depuis le réseau de données, le réseau de données étant en particulier au moins un des réseaux suivants : LAN, WAN ou Internet (IoT) .

4. Système de capteurs selon les revendications 1 à 3, comprenant en outre un dispositif de projection (90) pour projeter, de préférence dans le domaine visible ou le domaine infrarouge, un motif optique (92) sur la surface de l'objet (2), le motif optique (92) étant projeté alors qu'il est sensiblement centré autour de la direction de mesure, le motif optique (92) comprenant de préférence au moins un des motifs suivants :

- un motif de lignes, de préférence un motif de lignes orthogonales,
- un motif graphique comportant des courbes.

5. Système de capteurs selon une quelconque revendication précédente, dans lequel la plage de distance prédéfinie va d'environ 5 cm à environ 25 cm, et dans lequel la plage de tolérance angulaire va de -2° à 2°.

6. Système de capteurs selon une quelconque revendication précédente, comprenant en outre au moins un capteur 3D (55), et dans lequel l'unité de contrôle (30) est configurée pour déterminer la position de l'objet (2) par rapport au bras robotique (42) et au dispositif de mesure (40) dans un système de coordonnées 3D.

7. Système de capteurs selon une quelconque revendication précédente, dans lequel l'unité de contrôle (30) est en outre configurée pour stocker un modèle 3D prédéfini de l'objet (2).

8. Procédé destiné à mesurer un paramètre d'au moins une couche de peinture disposée sur une surface d'un objet (2), comprenant :

- l'obtention d'un système de capteurs (1) de l'une quelconque des revendications 1 à 7,
- le positionnement du dispositif de mesure (42) dans une première pose de mesure pour mesurer un paramètre de l'au moins une couche de peinture à un emplacement de mesure prédéfini sur la surface de l'objet (2), la distance entre le dispositif de mesure (42) et la surface de l'objet étant réglée pour se situer dans une plage de distance prédéfinie, et le vecteur de la direction de mesure n du dispositif de mesure (42) étant réglé pour être perpendiculaire à la surface de l'objet (2) à l'intérieur d'une plage de tolérance angulaire allant de -5° à 5°,
- l'émission d'au moins un signal de rayonnement (60) vers la surface de l'objet (2),
- la réception d'un signal de rayonnement réfléchi (70) qui a interagi avec la couche de peinture,
- le calcul d'un paramètre de la couche de peinture au moyen du signal de rayonnement réfléchi (70).

9. Procédé selon la revendication 8, dans lequel le positionnement du dispositif de mesure (42) dans une première pose de mesure comprend le déplacement du dispositif de mesure (42) jusqu'à une pose prédéfinie, pour déterminer la distance du dispositif de mesure jusqu'à la surface et l'orientation angulaire par rapport à la surface au moyen de signaux provenant de l'agencement de capteurs (25) au niveau du dispositif de mesure (42) et éventuellement du récepteur térahertz (20), et pour régler à nouveau la pose du dispositif de mesure (42) par contrôle du bras robotique (40), et éventuellement dans lequel le système de capteurs (1) comprend une interface réseau pour le connecter à un réseau de données, de telle sorte que le système de capteurs (1) est fonctionnellement connecté à l'interface réseau pour au moins une opération parmi : l'envoi d'informations d'état de dispositif au réseau de données et la réalisation d'une commande reçue depuis le réseau de données, le réseau de données étant en particulier au moins un des réseaux suivants : LAN, WAN ou Internet (IoT) .

10. Procédé selon la revendication 8 ou 9, dans lequel une distance du dispositif de mesure (42) par rapport à la surface de l'objet (2) est déterminée par utilisation de données provenant de l'agencement de capteurs (25) du dispositif de mesure (42).

**11.** Procédé selon l'une quelconque des revendications 8 à 10, dans lequel une orientation du dispositif de mesure (42) par rapport à la surface de l'objet (2) est déterminée par utilisation de données provenant de l'agencement de capteurs (25) du dispositif de mesure (42) .

**12.** Procédé selon l'une quelconque des revendications 8 à 11, dans lequel un motif optique (92) est projeté depuis le dispositif de mesure (42) sur la surface de l'objet (2), et dans lequel une réflexion du motif optique est détectée par l'agencement de capteurs (25) du dispositif de mesure (42).

**13.** Procédé selon l'une quelconque des revendications 8 à 12, dans lequel l'objet (2) est un corps revêtu (2) comportant un revêtement (4), dans lequel des mesures sont réalisées successivement pour une pluralité d'emplacements de mesure prédéfinis sur la surface de l'objet (2), et dans lequel le traitement du signal de réponse détecté comporte le calcul d'au moins un des paramètres de revêtement suivants du revêtement (4) et/ou, si elles sont présentes, d'au moins une des première et deuxième couches de revêtement (2a, 2b) :

(a) une épaisseur ;
(b) un identifiant de type de peinture caractérisant un type de peinture contenu dans au moins une couche (4a) du revêtement (4), tel qu'une peinture à l'eau ou en phase solvant ;
(c) un poids spécifique d'au moins une couche (4a) du revêtement (4), le poids de la couche étant éventuellement obtenu à partir de l'indice de réfraction et/ou de l'identifiant de type de peinture de la couche ;
(d) un paramètre de défaut indiquant un défaut dans au moins une couche (4a) du revêtement (4) ;
(e) un nombre total de couches du revêtement (4).

**14.** Procédé selon les revendications 8 à 13, dans lequel l'objet (2) en est un parmi un composant d'automobile, un composant de train, un composant d'aéronef et un composant d'éolienne, et dans lequel l'objet (2) comprend au moins un constituant parmi un métal ferreux, un métal non ferreux et un matériau composite à fibres comme substrat, et dans lequel le revêtement (4) est un film de peinture, et dans lequel une unité de revêtement est prévue pour appliquer au moins une des couches suivantes du film de peinture :

(a) une couche de revêtement électrolytique,
(b) une couche d'apprêt,
(c) une couche de fond,
(d) une couche de revêtement transparent,

ou une combinaison de (a)-(d).

**15.** Installation de revêtement, comprenant :

- une unité de revêtement pour appliquer au moins une couche de revêtement d'un revêtement (4) à l'objet (2) ; et
- un système de capteurs (1) selon l'une quelconque des revendications 1 à 7 pour caractériser le revêtement (4), y compris la couche de revêtement appliquée, par un procédé de l'une quelconque des revendications 8 à 14.

Fig.1

Fig.2

Fig.3

Fig.4

Fig.5

Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004028618 A
- EP 2213977 A1
- EP 2899499 A1
- US 4977853 A
- US 2008091360 A1